# EUROPÄISCHE PATENTSCHRIFT

(11) **EP 1 154 543 B1**
(45) Veröffentlichungstag und Bekanntmachung des Hinweises auf die Patenterteilung: **08.02.2006**
(21) Anmeldenummer: 01110640.8
(22) Anmeldetag: 02.05.2001
(51) Int. Cl.: H02K 3/34

(54) **Isolierung von Statorwicklungen durch Schrumpfschläuche**
Insulation of stator windings through shrink tubing
Isolation d'enroulements statoriques par des manchons rétractables

(30) Priorität: 12.05.2000 DE 10023204
(43) Veröffentlichungstag der Anmeldung: 14.11.2001
(73) Patentinhaber: Alstom Technology Ltd, 5400 Baden (CH)
(72) Erfinder: Baumann, Thomas, Dr., 5430 Wettingen (CH); Oesterheld, Jörg, Dr., 5413 Birmenstorf (CH); Gasparini, Rico, 5415 Rieden (CH)

(56) Entgegenhaltungen:
- EP-A- 0 530 952
- DE-A- 1 490 435
- GB-A- 1 426 617
- GB-A- 1 514 924
- US-A- 3 049 801
- US-A- 3 106 771
- US-A- 3 515 798

## Beschreibung

### Technisches Gebiet

Die Erfindung betrifft ein Verfahren zur Isolierung von Statorwicklungen für rotierende elektrische Maschinen, insbesondere für Gleichstrommaschinen und Wechselstrommaschinen.

### Stand der Technik

Im allgemeinen weisen derartige elektrische Maschinen einen Stator und einen Rotor auf, um mechanische Energie in elektrische Energie umzuwandeln (Generator) oder, um umgekehrt, elektrische Energie in mechanische Energie umzuwandeln (Elektromotor). In den Leitern der Statorwicklungen werden, je nach Betriebszustand der elektrischen Maschine, Spannungen erzeugt. Daher müssen die Leiter der Statorwicklungen entsprechend isoliert werden, um einen Kurzschluß zu vermeiden.

Statorwicklungen in elektrischen Maschinen können unterschiedlich aufgebaut sein. Es besteht die Möglichkeit mehrere gegeneinander isolierte Einzelleiter zu bündeln und das so entstandene Leiterbündel, welches oft als Leiterstab bezeichnet wird, mit einer sogenannten Hauptisolierung zu versehen. Zur Herstellung der Statorwicklungen werden mehrere Leiterstäbe an ihren Stirnflächen miteinander verbunden. Diese Verbindung kann beispielsweise über eine Metallplatte erfolgen, an die sowohl die jeweils isolierten Einzelleiter des ersten Leiterstabs als auch die jeweils isolierten Einzelleiter des zweiten Leiterstabs leitend angeschlossen werden. Daher sind die Einzelleiter des Leiterstabes im Bereich der Metallplatte nicht voneinander isoliert.

Alternativ zur Bündelung der Einzeleiter in Leiterstäbe wird ein langer, isolierter Einzelleiter zu einer ebenen, ovalen Spule gewickelt, die Spulenurform oder Fisch genannt wird. In einem anschließenden Vorgang, der sogenannten Spreizung, werden die Spulenurformen bzw. Fische in ihre endgültige Form überführt und in den Stator eingebaut.

In beiden oben beschriebenen Fertigungstechniken können sowohl runde als auch rechteckige Einzelleiter eingesetzt werden. Die für die Statorwicklungen aus mehreren Einzelleitern gefertigten Leiterstäbe bzw: Spulenurformen können wiederum jeweils runde bzw. rechteckige Querschnitte haben. In der vorliegenden Erfindung werden bevorzugt Leiterstäbe bzw. Spulenurformen mit rechteckigem Querschnitt, die aus rechteckigen Einzelleitern gefertigt wurden, betrachtet. Die Leiterstäbe können sowohl verroebelt sein d.h. mit gegeneinander verdrillten Einzelleitern, als auch nicht verroebelt sein d.h. mit unverdrillten, zueinander parallel verlaufenden Einzelleitern.

Gemäß dem Stand der Technik wird zur Isolierung der Statorwicklungen (z.B. Leiterstäbe, Spulenurformen, Spulen) in der Regel Glimmerpapier, weiches aus mechanischen Gründen durch einen Glasgewebeträger verstärkt ist, in Bandform um den Leiter gewickelt. Anschließend wird der umwickelte Leiter, welcher gegebenenfalls nach der Bewicklung noch verformt wird, mittels eines aushärtenden Harzes imprägniert, was zu einer duroplastischen, nicht schmelzbaren Isolierung führt. Es sind ferner Isolierungen mit thermoplastischer Matrix bekannt, die ebenfalls in Bandform auf den Leiter aufgebracht werden, wie beispielsweise Asphalt, Schellack (Brown Boveri Review Vol. 57, S. 15: R. Schuler, "Insulation Systems for High-Voltage Rotating Machines") Polysulfon und Polyetheretherketon (DE 43 44044 A1). Diese Isolierungen sind oberhalb der Schmelztemperatur der Matrix wieder plastisch verformbar.

Diese durch Umwickeln aufgebrachten Isolierungen von Statorwicklungen weisen den Nachteil auf, daß lhre Fertigung zeit- und kostenintensiv ist. In diesem Zusammenhang sind der Wickelprozeß und der lmprägnierprozeß besonders zu erwähnen, welche aufgrund der physikalischen Eigenschaften des Glimmerpapieres und des lmprägnierharzes nicht mehr wesentlich beschleunigt werden können. Ferner ist dieser Fertigungsprozeß gerade bei dicken Isolierungen fehleranfällig, wenn sich das Glimmerpapier nur unzureichend an die Statorwicklung anpaßt.

Insbesondere können durch eine ungenügende Justierung der Wickelmaschine nach dem Umwickeln der Statorwicklung in dem Glimmerpapier Falten und Risse auftreten, beispielsweise durch einen zu steilen oder zu flachen Winkel zwischen dem Glimmerpapier und dem Leiter oder durch eine ungeeignete statische oder dynamische Zugkraft, welche beim Umwickeln auf das Glimmerpapier wirkt. Ferner kann es durch zu großen Bandauftrag zu Überpressungen kommen, die eine gleichmäßige Durchimprägnierung der Isolierung in der Imprägnierform verhindern. Somit kann eine lokal oder allgemein fehlerhafte Isolierung erzeugt werden, welche eine reduzierte Kurzzeit- und/oder Langzeitfestigkeit aufweist. Dies setzt die Lebensdauer von derartigen Isolierungen für Statorwicklungen erheblich herab.

Ferner sind aus der Kabeitechnik-Herstellungsverfahren zur Ummantelung von Leiterbündeln bekannt, wobei stets Leiterbündel mit rundem Querschnitt in einem Extrusionsprozeß-mit einem Thermoplast oder mit Elastomeren ummantelt werden. Die Druckschrift US-A-5,650,031, welche den gleichen Gegenstand wie die WO 97/11831 betrifft, beschreibt ein derartiges Verfahren zur Isolierung von Statorwicklungen, bei welchem die Statorwicklung durch eine zentrale Bohrung eines Extruders geführt wird. Dabei wird die Statorwicklung, welche eine komplexe Form aufweist, mit einem extrudierten thermoplastischen Material gleichzeitig an jeder , Seite der komplexen Form insbesondere durch eine Ko-Extrusion ummantelt.

Des weiteren sind in der Kabeltechnik polymere Isolierungen bekannt, welche auf die Kabel mittels einer Warmschrumpftechnik aufgebracht werden. Es handelt sich dabei um vorfabrizierte Schläuche mit rundem Querschnitt aus vernetzbaren Thermoplasten, Elastomeren, Polyvinylidenfluorid, PVC, Silikonelastomer oder Teflon. Diese Materialien werden nach der Fabrikation im erwärmten Zustand gedehnt und abgekühlt. Nach der Abkühlung behält das Material seine gedehnte Form bei. Dies geschieht beispielsweise dadurch, daß sich kristalline Zentren bilden, welche die gestreckten Makromoleküle fixieren. Nach erneuter Erwärmung über den kristallinen Schmelzpunkt hinaus lösen sich die kristallinen Zonen auf, wobei die Makromoleküle wieder ihren ungedehnten Zustand einnehmen und somit die Isolierung aufgeschrumpft wird. Ferner sind Kaltschrumpf-Schläuche bekannt, die im kalten Zustand mechanisch aufgeweitet werden. Im aufgeweiteten Zustand werden diese Schläuche über eine Stützkonstruktion gezogen, welche die Schläuche dauerhaft im gedehnten Zustand hält. Nachdem die Schläuche über die zu isolierenden Bauteile geschoben und fixiert worden sind, wird die Stützkonstruktion in geeigneter Weise entfernt, beispielsweise durch Herausziehen einer spiralfömnig perforierten Stützkonstruktion. Zu den vorgenannten Kategorien des Standes der Technik gehören weiterhin die DE-A-1490435, die GB-A-1426617 und die US-A-3515798, welche sämtlich Schrumpfschläuche mit rundem Querschnitt zur Isolierung von Leitern mit rundem Querschnitt betreffen. Aus der GB-A-1514924 ist dagegen ein Schrumpfschlauch mit rundem Querschnitt bekannt, welcher unter Zwischenschaltung einer ebenfalls einen runden Querschnitt aufweisenden Stützkonstruktion auf einen Leiter mit rechteckigem Querschnitt aufgebracht wird. Schliesslich zeigt die EP-A-0530952 die Verwendung von Schrumpfschläuchen mit rundem Querschnitt unter Zwischenschaltung von an die Form des Leiters angepassten, unterschiedlich geformten Stützkemen, z.B. Stützkerne mit rechteckigem Querschnitt. Derartige Schrumpftechniken können jedoch bei Statorwicklungen mit rechteckigem Querschnitt nicht verwendet werden, da die Schläuche mit rundem Querschnitt an den Kanten der rechteckigen Leiter entweder unmittelbar nach dem Schrumpfen oder nach einer kurzen Belastung während des Betriebs der elektrischen Maschine aufgrund der thermischen und mechanischen Beanspruchung leicht reißen.

Bereits bei der Herstellung der Statorwicklungen, insbesondere beim Biegen der Leiter, und beim Handling, insbesondere beim Einbau in den Stator, muß die Isolierung eine beachtlich hohe mechanische Beanspruchung verkraften, welche die Isolierung der Statorwicklungen beschädigen kann. Darüber hinaus unterliegt die Isolierung der Statorwicklungsleiter beim Betrieb der elektrischen Maschine einer kombinierten Beanspruchung. Einerseits wird die Isolierung zwischen dem Leiter, an welchem eine hohe Spannung anliegt, und dem Stator durch ein resultierendes elektrisches Feld dielektrisch beansprucht. Andererseits ist die Isolierung durch die im Leiter erzeugte Wärme einer thermischen Wechselbeanspruchung ausgesetzt, wobei beim Durchfahren der jeweiligen Betriebszustände der Maschine ein hohes Temperaturgefälle in der Isolierung vorliegt. Aufgrund der unterschiedlichen Ausdehnung der beteiligten Materialien treten auch mechanische Wechselbeanspruchungen auf. Dabei kommt es zum einen zu einer Scherbeanspruchung der . Verklebung zwischen Leiter und Isolierung und zum anderen besteht an der Grenzfläche zwischen der isolierung und der Nutwand des Stators die Gefahr der Abrasion. Aufgrund dieser hohen Beanspruchungen kann eine Rißbildung der isolierung der Statorwicklungen auftreten, welche einen Kurzschluß verursacht. Folglich kommt es zum Ausfall der gesamten elektrischen Maschine, wobei die Reparatur mit einem hohen zeitlichen und kostenintensiven Aufwand verbunden ist.

### Darstellung der Erfindung

Hier setzt die Erfindung an. Der Erfindung, wie sie in den Ansprüchen gekennzeichnet ist, liegt die Aufgabe zugrunde, ein Verfahren zur Isolierung von Stator wicklungen für rotierende elektrische Maschinen zu schaffen, wobei isolierte Statorwicklungen hergestellt werden, welche die Isolierung der Statorwicklung über die vorgesehene Lebensdauer der elektrischen Maschine gewährleisten.

Erfindungsgemäss wird diese Aufgabe durch das Verfahren mit den Merkmalen des unabhängigen Anspruchs 1 und einen Schrumpfschlauch mit den Merkmalen des unabhängigen Anspruchs 16 gelöst. Das erfindungsgemäße Verfahren zur Herstellung einer isolierten Statorwicklung für rotierende elektrische Maschinen, insbesondere für Gleichstrommaschinen und Wechselstrommaschinen, welche aus zumindest einem elektrisch leitenden Leiterstab mit im wesentlichen rechteckigem Querschnitt aufgebaut ist, wobei zumindest ein elektrisch isolierender Schrumpfschlauch, der vor der Schrumpfung einen im wesentlichen rechteckigem Querschnitt aufweist, um den Umfang des Leiterstabs aufgebracht wird und auf den Leiterstab aufgeschrumpft wird, weist den Vorteil auf, daß durch das Aufschrumpfen eines Schlauches eine isolierte Statorwicklung hergestellt wird, die eine vorteilhafte Isolierung gewährleistet. Dies ist insbesondere deshalb der Fall, weil sich der elektrisch isolierende Schrumpfschlauch stets an jeder Stelle an den Leiterstab ohne Bildung von Falten und Hohlräumen anschmiegt, wobei sich die Kanten des Schrumpfschlauchs an den Kanten des Leiterstabs anlegen. Dadurch wird eine mögliche Rißbildung des Schtumpfschlauchs an den Kanten vermieden. Außerdem gewährleistet die Vorfabrizierung des Schrumpfschlauches mit den bekannten Formgebungsverfahren (Extrusion, Spritzguß) zusammen mit einer elektrischen Bauteilprüfung vor der Montage eine optimale Isolierungsqualität. Ferner umgibt der Schrumpfschlauch durch seine definierte Dicke den Leiterstab in der erforderlichen Weise gleichmäßig an jeder Stelle seines Umfangs, um für eine geeignete elektrische und mechanische Isolierung zu sorgen. Somit wird gewährleistet, daß isolierte Statorwicklung eine ausreichende Isolierung über die vorgesehene Lebensdauer der elektrischen Maschine aufweist. Aufgrund der wenigen und einfach auszuführenden Verfahrensschritte, wird eine isolierte Statorwicklung in zeit- und kostengünstiger Art und Weise hergestellt, wobei sowohl gerade als auch vorgebogene Leiterstäbe isoliert werden können, so daß der Leiterstab vor oder nach dem Aufbringen der Isolierung in die endgültige Form gebogen werden kann.

Es hat sich als vorteilhaft erwiesen, daß der Schrumpfschlauch im kalten Zustand mechanisch aufgedehnt wird und um den äußeren Umfang einer Stützeinrichtung, insbesondere einer Stützhülse, aufgebracht wird, bevor die mit dem Schrumpfschlauch umgebene Stützhülse über den Leiterstab gezogen wird, wobei die Stützhülse bezogen auf den Leiterquerschnitt ein Übermaß aufweist, um das Aufbringen des Schrumpfschlauchs auf den Leiterstab zu erleichtern.

Die Anlage des Schrumpfschlauchs an dem Leiterstab wird dadurch sichergestellt, daß, nach dem Aufbringen der mit dem Schrumpfschlauch umgebenen Stützhülse auf den Leiterstab, die Stützhülse zwischen dem Schrumpfschlauch und dem Leiterstab, insbesondere durch ein spiralförmiges Auftrennen der Stützhülse, entfernt wird, so daß sich der Schrumpfschlauch um den Leiterstab zusammenzieht.

Andererseits kann die Anlage des Schrumpfschlauchs an dem Leiterstab dadurch bewerkstelligt werden, daß die Stützhülse ein schmelzbares Polymer aufweist, wobei nach dem Aufbringen der mit dem Schrumpfschlauch umgebenen Stützhülse auf den Leiterstab, die Stützhülse durch Wärmeeinleitung zum Schmelzen gebracht wird, so daß der gedehnte Schrumpfschlauch relaxieren kann und sich an den Leiterstab anlegt. Die geschmolzene Stützhülse dient dabei in vorteilhafter Weise als Klebe- und Dichtmasse. Falls die Stützhülse leitfähig ausgebildet ist, übernimmt die geschmolzene Stützhülse gleichzeitig die Funktion des Innenglimmschutzes.

Ferner hat es sich als vorteilhaft erwiesen, einen Schrumpfschlauch aus warmschrumpfendem Material zu verwenden, welcher im warmen Zustand mechanisch aufgedehnt und im gedehnten Zustand abgekühlt wird. Durch spezifische Materialeigenschaften wird ein Teil der Dehnung im kalten Zustand aufrechterhalten. In diesem Zustand wird der Schrumpfschlauch über den Leiterstab gezogen, wobei der Schrumpfschlauch anschließend unter Wärmeeinwirkung auf den Leiterstab aufgeschrumpft wird, so daß keine weiteren Vorrichtungen zur Isolierung erforderlich sind.

Alternativ dazu kann die Montage unter Nutzung von Druckluft erfolgen, die dem Aufweiten des Schlauchs dient.

Darüber hinaus ist es als vorteilhaft anzusehen, daß der Schrumpfschlauch aus mehreren Schichten mit unterschiedlichen Eigenschaften um den Umfang des Leiterstabs aufgebaut ist, wobei die Schichten für den Innenglimmschutz, die Hauptisolierung, den Nutglimmschutz und den Bügelglimmschutz sorgen. Derartige Schrumpfschläuche werden bevorzugt durch Coextrusion, Blasformen oder Spritzgießen hergestellt.

Es hat sich ferner als Vorteil erwiesen, daß eine Vielzahl von Schrumpfschläuchen und/oder Schläuchen mit unterschiedlichen Eigenschaften um den Umfang des Leiterstabs aufgebracht werden, wobei die Schrumpfschläuche und/oder Schläuche für den Innenglimmschutz, die Hauptisolierung, den Nutglimmschutz und den Bügelglimmschutz sorgen.

Für eine bevorzugte mechanische Verbindung zwischen dem Leiterstab und dem Schrumpfschlauch kann gesorgt werden, wenn der Schrumpfschlauch an seinen Kontaktflächen zum Leiterstab einen thermisch stabilen Kleber aufweist. Dadurch kann auch die Bildung von Hohlräumen vermieden werden, so daß die thermische Leitfähigkeit verbessert wird und elektrische Hohlraumentladungen vermieden werden, was insbesondere bei Varianten von Vorteil ist, bei denen kein Innenglimmschutz eingesetzt wird.

Wenn der Schrumpfschlauch aus einem extrudierten Elastomerschlauch aufgebaut ist, ist er einerseits in vorteilhafter Weise kontinuierlich herzustellen und andererseits auf verschiedene Stabgeometrien einstellbar. Ferner verhindert die Elastomer-Isolierung, daß es beim Biegen zu Rissen in der Isolierung kommt. Die Erfindung benutzt die hohe Elastizität des Elastomers bei gleichzeitig hoher thermimischer und elektrischer Beanspruchbarkeit. Bei höherer thermischer Belastung wird vorteilhaft Silikonelastomer verwendet.

In einem besonders bevorzugten Verfahren werden die Leiterstäbe erst nach der Ummantelung mit dem Elastomer in ihre endgültige Form gebracht. Durch das Biegen der Evolventen wird die aufgebrachte Isolierung stark gedehnt. Die erfindungsgemäße Verwendung von Elastomer erweist sich hierbei als besonders vorteilhaft, da sie die mechanische, elektrische bzw. thermische Beeinträchtigung der durch das Biegen beanspruchten Isolierung reduziert bzw. gänzlich verhindert.

Weitere vorteilhafte Ausgestaltungen, Merkmale und Details der Erfindung ergeben sich aus den abhängigen Ansprüchen, der Beschreibung der Ausführungsbeispiele und der Zeichnungen. Die Erfindung soll nachfolgend anhand eines Ausführungsbeispiels im Zusammenhang mit den Zeichnungen näher erläutert werden.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1a: einen Querschnitt durch eine isolierte Statorwicklung mit Leiterstab und Schrumpfschlauch;
- Figur 1b: einen Querschnitt durch eine isolierte Statorwicklung mit Leiterstab, Stützhülse und Schrumpfschlauch (vor Schrumpfung);
- Figur 2: eine teilweise geschnittene Seitenansicht von Fig. 1 b; und
- Figur 3: eine Vorrichtung zum Biegen der isolierten Leitungsstäbe.

In den Figuren sind nur die für das Verständnis der Erfindung wesentlichen Elemente und Bauteile gezeigt.

### Wege zur Ausführung der Erfindung

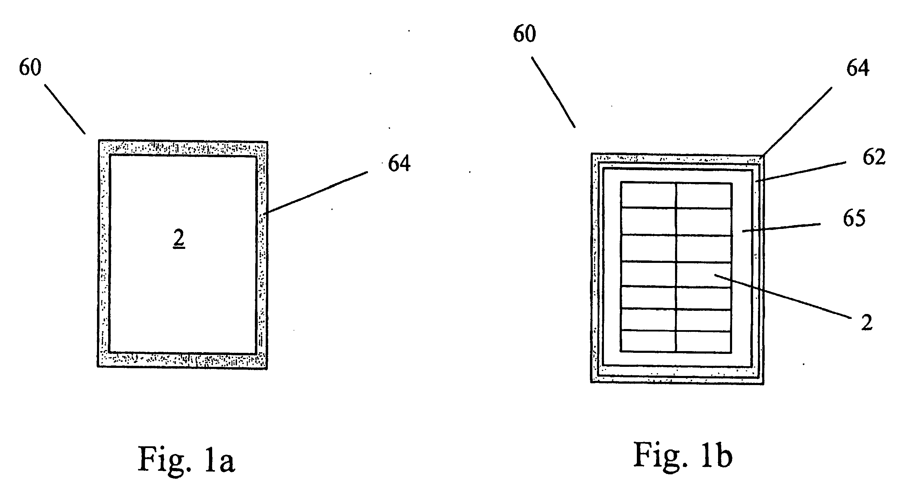

Figur 1a zeigt einen Querschnitt durch eine isolierte Statorwicklung 60. Ein rechteckiger Leiterstab 2 ist dabei von einem Schrumpfschlauch 64 umgeben. Die Leiterstäbe selbst sind in der Regel aus einem Bündel von einzelnen, isolierten Leitern aufgebaut. Bei verroebelten Leiterstäben sind die Einzelleiter zum Teil gegenseitig verdrillt, während bei nicht verroebelten Leiterstäben die Einzelleiter ohne Verdrillung parallel zueinander verlaufen. In der Erfindung können Leiterstäbe mit Einzelleitern runden Querschnitts verwendet werden. Besonders vorteilhaft ist jedoch die Anwendung des erfindungsgemäßen Verfahrens auf Leiterstäbe mit Einzelleitern aus rechteckigem Querschnitt. Bei Verwendung von rechteckigen Querschnitten werden die Vorteile der Erfindung auch dann erzielt, wenn die Querschnitte der Einzelleiter und/oder des Leiterstabs geringfügig von der Rechtecksform abweichen. Bei einem Aufbau des Leiterstabes aus Einzelleitern sind diese vorteilhaft provisorisch miteinander verbunden, um ein gleichmäßiges und hohlraumfreies Ummanteln des Leiterstabes mit der Hauptisolierung zu ermöglichen z.B. durch provisorisches Verkleben der Einzelleiter mit einem elastischen Material oder einem gegen Scherkräfte mechanisch schwachen Kleber, wodurch das spätere Verbiegen nicht behindert wird. Alternativ kann auch ein Kleber verwendet werden, der bei mäßiger Erwärmung (z.B. vor dem Biegen) seine Klebekraft verliert und damit den Biegevorgang begünstigt.

Der in Figur 1a gezeigte Schrumpfschlauch 64 ist bevorzugt aus warmschrumpfendem Material gefertigt. Das Material wird im warmen Zustand gedehnt und durch einen anschließenden Kühlvorgang zumindest teilweise oder vollständig im gedehnten Zustand gehalten, ohne daß weiterhin mechanisch auf den Schlauch eingewirkt wird. Bei Erwärmung erhält der Schrumpfschlauch wieder sein gummielastisches Verhalten und schrumpft unter der Wärmeeinwirkung auf den Stab auf.

Figur 1 b zeigt einen Querschnitt durch eine isolierte Statorwicklung 60, welche aus einem elektrisch leitenden Leiterstab 2, welcher verroebelt sein kann, mit rechtekkigem Querschnitt aufgebaut ist und von einer Stützhülse 62 mit Übermaß 65 gegenüber dem Leiterquerschnitt umgeben ist, welche den elektrisch isolierenden Schrumpfschlauch 64 mit rechteckigem Querschnitt gegenüber den Leiterquerschnitt ebenfalls auf Übergröße abstützt, um die einfache Montage, d.h. das Überschieben des Schlauchs zu ermöglichen. Auch hier ist es bevorzugt, sowohl den Innenquerschnitt als auch den Außenquerschnitt des Schrumpfschlauches rechteckig auszubilden. Der hier gezeigte Schrumpfschlauch ist bevorzugt aus kaltschrumpfendem Material gefertigt.

Bei den beiden in Figuren 1 a und b gezeigten Ausführungsformen kann der Schrumpfschlauch aus warm- oder kaltschrumpfendem Material hergestellt sein. Bevorzugt weist der Schrumpfschlauch einen rechteckigen Querschnitt auf, der mit den Querschnittsproportionen des Leiterstabes übereinstimmt, wobei der innere Querschnitt des völlig geschrumpften Schlauchs gegenüber dem Leiterquerschnitt ein Untermaß aufweisen sollte, um ein optimales Anlegen an den Leiterquerschnitt zu gewährleisten. Besonders bevorzugt sind sowohl der Innen- als auch der Außenquerschnitt des Schrumpfschlauches rechteckig.

Als Material für den Schrumpfschlauch wird bevorzugt ein Elastomer verwendet. Das Elastomer zeichnet sich durch hohe Elastizität aus. Darüber hinaus weist es eine hohe elektrische und thermische Beständigkeit auf. Insbesondere bei thermisch hoch belasteten Maschinen werden bevorzugt Silikonelastomere verwandt. Gerade die vorteilhafte Verwendung von Elastomer (im Gegensatz zu anderen Materialien) wird den hohen Anforderungen an die Resistenz des Materials und an seine mechanische Flexibilität gerecht. Bei den Elastomeren kann es sich um kalt- oder warmvernetzende Typen handeln. Die Vernetzung bei den kaltvernetzenden Typen wird z.B. durch Vermischung zweier Komponenten gestartet, wobei eine der Komponenten einen Vernetzer enthält. Bei den warmvernetzenden Typen kann die Erwärmung des Elastomers bereits in der Spritzgußform bzw. im Extruder erfolgen. Bei der Extrusion kann die Vernetzung auch nach Verlassen des Extruders z.B. durch Heißluft eingeleitet werden.

Die Materialeigenschaften der Hauptisolierung können durch Zugabe von aktiven (z.B. Kieselsäure) und passiven (z.B. Quarzmehl) Füllstoffen so eingestellt werden, daß sie den entsprechenden mechanischen Anforderungen der elektrischen Maschinen genügen, in welche die mit der Hauptisolierung versehenen Statorwicklungen eingebaut werden.

In manchen Anwendungen werden die Leiterstäbe bevorzugt mit Nutglimmschutz und Absteuerung (Bügelglimmschutz), sowie gegebenenfalls mit Innenglimmschutz versehen. Der Innenglimmschutz einer Statorwicklung ist in der Regel eine leitfähige Materialschicht die sich zwischen Hauptisolierung und Leiterstab befindet. Sie sorgt für einen um den Leiterstab liegenden, definierten Potentialbelag und verhindert elektrische Entladungen, die durch zwischen dem Leiterstab und der Hauptisolierung liegende Hohlräume verursacht werden können. Der Nut- bzw. Außenglimmschutz einer Statorwicklung ist in der Regel eine zwischen Hauptisolierung und Statornut angeordnete leitfähige Materialschicht. Mit dem Außenglimmschutz, welcher wiederum einen definierten Potentialbelag erzeugt, sollen elektrische Entladungen verhindert werden, die beispielsweise durch unterschiedliche Abstände-des auf hohem Potential liegenden, isolierten Leiterstabes von der auf Masse liegenden Statornut hervorgerufen werden können. Die Absteuerung (Bügelglimmschutz) verhindert in der Regel elektrische Entladungen am Nutaustritt eines Leiterstabs. Im Rahmen der Erfindung verwendete Möglichkeiten zur Aufbringung solcher Schutzschichten sind beispielsweise leitfähige bzw. halbleitfähige Anstriche auf Elastomerbasis, entsprechende Bänder (u.U. selbstverschweißend) die durch Strahlung oder Wärme vernetzt werden können. Alternativ können kalt- oder warmschrumpfende Schläuche (z.B. für Stäbe) bzw. Manschetten (z.B. für Spulen) verwendet werden. Bei dem Gebrauch von Schrumpfschläuchen bzw. Manschetten für den Innenglimmschutz können diese vorteilhaft auf ihrer Innenseite mit einem fließfähigen, plastischen Material versehen werden, um auf der Oberfläche des Leiterstabes befindliche Hohlräume aufzufüllen. Grundsätzlich ist dies auch beim Außenglimmschutz möglich.

In einer weiteren bevorzugten Ausgestaltung des Verfahrens werden Innenglimmschutz, Hauptisolierung und/oder Außenglimmschutz mittels mehrerer Schrumpfschläuche bzw. mittels eines aus mehreren Schichten bestehenden Schrumpfschlauches aufgebracht.

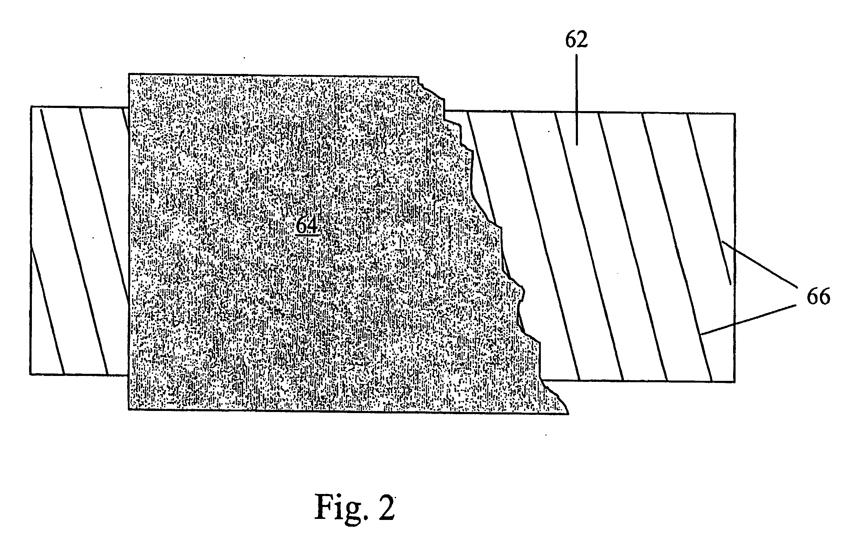

In Figur 2 ist die isolierte Statorwicklung 60 gezeigt, wobei der Schrumpfschlauch 64 teilweise geschnitten dargestellt ist. Der Schrumpfschlauch 64 umgibt die Stützhülse 62, welche spiralförmig angeordnete Perforationen 66 zur Entfernung der Stützhülse aufweist.

Zur Herstellung der isolierten Statorwicklung 60 wird der Schrumpfschlauch 64 im kalten Zustand mechanisch aufgedehnt und im aufgedehnten Zustand um den äußeren Umfang der Stützhülse 62 aufgebracht, welche den Schrumpfschlauch 64 im gedehnten Zustand hält. Danach wird die mit dem Schrumpfschlauch 64 umgebene Stützhülse 62 über den Leiterstab 2 gezogen und gegebenenfalls fixiert, so daß der Umfang des Leiterstabs 2 von der Stützhülse 62 umgeben ist. Nach dem Aufbringen der mit dem Schrumpfschlauch 64 umgebenen Stützhülse 62 auf den Leiterstab 2, wird die Stützhülse 62 zwischen dem Schrumpfschlauch 64 und dem Leiterstab 2 durch ein spiralförmiges Auftrennen der Stützhülse 62 entlang spiralförmig angeordneter Perforationen 66 entfernt. Daraufhin relaxiert bzw. entspannt sich der gedehnte Schrumpfschlauch 64 und legt sich folglich an den Leiterstab 2 an. Der derart isolierte Leiterstab 2 wird mittels einer Biegevorrichtung in die für den Stator geeignete Form gebogen, wobei der isolierte Leiterstab 2 bei genügender Flexibilität auch direkt am Stator gebogen werden kann.

Alternativ ist die Stützhülse 62 nicht als perforierte Spirale aufgebaut, sondern sie besteht aus einem schmelzbaren Polymer z.B. Thermoplast oder Duroplast im Bi-Stage Zustand. Durch Wärmezufuhr wird die Stützhülse zum Schmelzen gebracht, so daß der gedehnte Schlauch relaxieren kann und sich an den Leiter anschmiegt. Das geschmolzene Polymer dient nach Erstarrung zusätzlich als Klebemasse bzw. als Dichtmasse zum Auffüllen von eventuellen Hohlräumen. Ist das Polymer leitfähig, kann es gleichzeitig die Funktion des Innenglimmschutzes übernehmen.

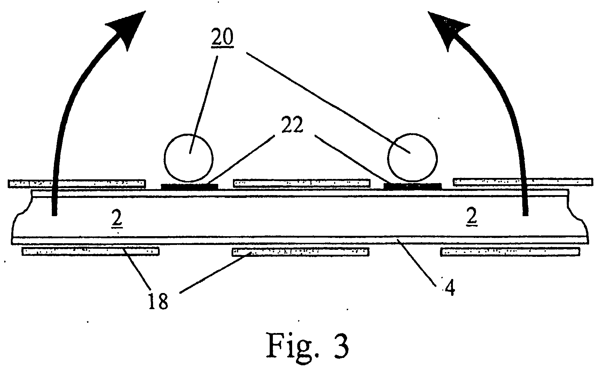

Figur 3 zeigt eine gegenüber dem Stand der Technik modifizierte Biegevorrichtung. Die isolierten Leiterstäbe werden in die Spannbacken 18 der Biegevorrichtung gelegt und dort durch Bewegung der Spannbacken 18 gegenüber den Radienwerkzeugen 20 in ihre endgültige Form gebracht. Zwischen den Radienwerkzeugen 20 und der aus dem Schrumpfschlauch 64 hervorgegangenen Isolierschicht 4 des Leiterstabs 2 ist eine Schutzlage 22 angeordnet, die den an den Radienwerkzeugen entstehenden Druck flächenmäßig verteilt und so ein übermäßiges Quetschen der Isolierschicht 4 verhindert. Durch die gleichmäßig verteilte mechanische Belastung der Isolierschicht werden Beschädigungen der Isolierschicht verhindert. Das Biegen der Evolvente führt zu sehr großen Dehnungen in der Isolierschicht 4, welche aber von dem für den Schrumpfschlauch 64 verwendeten Elastomer ohne dessen Beschädigung aufgenommen werden können.

Ist der Leiterstab aus einem Bündel von Einzelleitern aufgebaut, so erfolgt durch das Biegen der bereits mit der Hauptisolierung versehenen Leiterstäbe eine Relatiwerschiebung der Einzelleiter untereinander als auch der an der Oberfläche des Leiterstabes liegenden Einzelleiter gegenüber der Hauptisolierung. Vorteilhaft ist die zwischen Leiterstab und Hauptisolierung liegende Grenzschicht so beschaffen, daß sie eine reibungsreduzierte Verschiebung der Einzelleiter gegenüber der Hauptisolierung ermöglicht. Dies kann z.B. durch Behandlung des Leiterstabs mit Trennmitteln erreicht werden. Das Auftreten von Spalten durch diese Relativbewegung an der Grenzfläche zum Leiter ist bedeutungslos, wenn in diesem Bereich ein fest mit der Hauptisolierung verbundener Innenglimmschutz verwendet wird. Ohne Innenglimmschutz ist die Verschiebung zumeist unkritisch, da im Biegebereich (nach der Absteuerung) das Feld reduziert ist.

Bei Verwendung eines Innenglimmschutzes weist dieser vorteilhaft eine gute Haftung gegenüber der Hauptisolierung auf, jedoch eine geringere Haftung gegenüber der Oberfläche des Leiterstabes. Dies wird vorzugsweise dadurch erreicht, daß Isolierschicht und Glimmschutz auf der gleichen chemischen Materialbasis beruhen (chemisch Bindung), während Innenglimmschutz und Drahtlackierung unterschiedliche Materialbasis mit vorzugsweise geringer Affinität besitzen. Trennmittel können diesen Effekt verstärken. Die Leiterstäbe selbst sind im Bereich der späteren Biegestellen bevorzugt nicht verroebelt.

Wie die vorstehende Beschreibung zeigt, können vielfache Abwandlungen und Abänderungen von der dargestellten Ausführungsform vorgenommen werden, ohne den Rahmen der Erfindung zu verlassen.

### Bezugszeichenliste

- 2: Leiterstab
- 4: Isolierschicht
- 18: Spannbacke
- 20: Radienwerkzeug
- 22: Schutzlage
- 60: isolierte Statorwicklung
- 62: Stützhülse
- 64: Schrumpfschlauch
- 65: Übermaß
- 66: Perforation

## Patentansprüche

1. Verfahren zur Herstellung einer isolierten Statorwicklung (60) für rotierende elektrische Maschinen, insbesondere für Gleichstrommaschinen und Wechsetstrommaschinen, welche aus zumindest einem elektrisch leitenden Leiterstab (2) mit rechteckigem Querschnitt aufgebaut ist, **dadurch gekennezeichnst, daß** zumindest ein elektrisch isolierender Schrumpfschlauch (64) vor der Schrumpfung der einen rechteckigen Querschnitt aufweist, um den Umfang des Leiterstabs aufgebracht wird und auf den Leiterstab aufgeschrumpft wird.

2. Verfahren nach Anspruch 1, **dadurch gekennzeichnet, daß** der Schrumpfschlauch (64) im kalten Zustand mechanisch aufgedehnt wird und um den äußeren Umfang einer Stützhütse (62) aufgebracht wird, bevor die mit dem Schrumpfschlauch umgebene Stützhülse über den Lefterstab (2) gezogen wird.

3. Verfahren nach Anspruch 2, **dadurch gekennzeichnet, daß** nach dem Aufbringen der mit dem Schrumpfschlauch umgebenen Stützhülse auf den Leiterstab, die Stützhülse (62) zwischen dem Schrumpfschlauch (64) und dem Leiterstab (2), entfernt wird.

4. Verfahren nach Anspruch 2, **dadurch gekennzeichnet, daß** die Stützhülse (62) ein schmelzbares. Polymer ist, wobei nach dem Aufbringen der mit dem Schrumpfschlauch umgebenen Stützhülse auf den Leiterstab, die Stützhülse durch Wärmeeinleitung zum Schmelzen gebracht wird.

5. Verfahren nach Anspruch 1, **dadurch gekennzeichnet, daß** ein Schrumpfschlauch (64) aus warmschrumpfenden Material verwendet und unter Wärmeeinwirkung auf den Leiterstab (2) aufgeschrumpft wird.

6. Verfahren nach Anspruch 1, **dadurch gekennzeichnet, daß** der Schrumpfschlauch (64) im kalten Zustand über den Leiterstab (2) gezogen wird, wobei der Schlauch mittels Druckluft aufgeweitet wird.

7. Verfahren nach einem der vorherigen Ansprüche, **dadurch gekennzeichnet, daß** der Schrumfsclauch (64) aus mehreren, radial Schichten mit unterschiedlichen Eigenschaften aufgebaut ist.

8. Verfahren nach Anspruch 7, **dadurch gekennzeichnet, daß** der Schrumpfschlauch (64) durch Ko-Extrusion, Blasformen oder Spritzgießen hergestellt wird.

9. Verfahren nach einem der vorherigen Ansprüche, **dadurch gekennzeichnet, daß** eine Vielzahl von Schrumpfschläuchen (64) unterschiedlicher Eigenschaften um den Umfang des Leiterstabs (2) aufgebracht werden.

10. Verfahren nach einem der vorherigen Ansprüche, **dadurch gekennzeichnet daß** der Schrumpfschlauch (64) an seinen Kontaktflächen zum Leiterstab (2) einen thermisch stabilen Kleber aufweist.

11. Verfahren nach einem der vorherigen Ansprüche, **dadurch gekennzeichnet, daß** der Schrumpfschlauch (64) aus einem extrudierten Elastomerschlauch aufgebaut ist.

12. Verfahren nach einem der vorherigen Ansprüche, **dadurch gekennzeichnet. daß** der mit dem Schrumpfschlauch (64) umgebene Leiterstab (2) mittels einer Biegevorrichtung (18, 20) in die für den Stator geeignete Form gebogen wird.

13. Verfahren nach einem der vorstehenden Ansprüche, wobei Leiterstäbe (2) bestehend aus Einzelleitern verwendet werden, wobei die Einzelleiter bevorzugt rechteckigen Querschnitt aufweisen.

14. Verfahren nach Anspruch 13, wobei die Einzelleiter provisorisch miteinander verbunden sind.

15. Verfahren nach einem der Ansprüche 13 oder 14, wobei die Leiterstäbe (2) im Bereich der Evolvente nicht verroebelt sind.

16. Schrumpfschlauch zum Ummanteln von Leiterstäben (2), wobei der Schrumpf schlauch (64) vor dem Ummanteln gedehnt wird und bereits vor dem Dehnen einen rechteckigen Innenquerschnitt sowie einen rechteckigen Außenquerschnitt aufweist.

17. Schrumpfschlauch nach Anspruch 16 wobei der Schrumpfschlauch (64) um eine Stützhülse (62) gelegt ist.

18. Verfahren nach Anspruch 3, **dadurch gekennzeichnet, daß** die Stützhülse (62) durch ein spiralförmiges Auftrennen der Stützhülse (62) entfernt wird.

19. Verfahren nach Anspruch 4, **dadurch gekennzeichnet, daß** das schmelzbare Polymer leitfähig ist.

## Claims

1. Method for producing an insulated stator winding (60) for rotating electrical machines, in particular for DC machines and AC machines, which comprise at least one electrically conductive conductor rod (2) having a rectangular cross section, **characterized in that** at least one electrically insulating shrink tube (64), which has a rectangular cross section prior to shrinking, is fitted around the circumference of the conductor rod and is shrunk onto the conductor rod.

2. Method according to Claim 1, **characterized in that** the shrink tube (64) is stretched mechanically in the cold state and is fitted around the outer circumference of a support sleeve (62) before the support sleeve, surrounded by the shrink tube, is drawn over the conductor rod (2).

3. Method according to Claim 2, **characterized in that**, once the support sleeve, surrounded by the shrink tube, has been fitted onto the conductor rod, the support sleeve (62) is removed between the shrink tube (64) and the conductor rod (2).

4. Method according to Claim 2, **characterized in that** the support sleeve (62) is a meltable polymer, the support sleeve being caused to melt owing to the introduction of heat once the support sleeve, surrounded by the shrink tube, has been fitted onto the conductor rod.

5. Method according to Claim 1, **characterized in that** a shrink tube (64) made from a heat-shrinking material is used and is shrunk onto the conductor rod (2) when subjected to heat.

6. Method according to Claim 1, **characterized in that** the shrink tube (64) is drawn over the conductor rod (2) in the cold state, the tube being widened by means of compressed air.

7. Method according to one of the preceding claims, **characterized in that** the shrink tube (64) comprises two or more layers lying radially one on top of the other and having different properties.

8. Method according to Claim 7, **characterized in that** the shrink tube (64) is produced by coextrusion, blowmoulding or injection moulding.

9. Method according to one of the preceding claims, **characterized in that** a large number of shrink tubes (64) having different properties are fitted around the circumference of the conductor rod (2).

10. Method according to one of the preceding claims, **characterized in that** the shrink tube (64) has a thermally stable adhesive on its contact faces with respect to the conductor rod (2).

11. Method according to one of the preceding claims, **characterized in that** the shrink tube (64) is composed of an extruded elastomer tube.

12. Method according to one of the preceding claims, **characterized in that** the conductor rod (2), surrounded by the shrink tube (64), is bent into the suitable shape for the stator by means of a bending device (18, 20) .

13. Method according to one of the preceding claims, conductor rods (2) comprising individual conductors being used, the individual conductors preferably having a rectangular cross section.

14. Method according to Claim 13, the individual conductors provisionally being connected to one another.

15. Method according to either of Claims 13 and 14, the conductor rods (2) not being transposed in the region of the involute.

16. Shrink tube for the purpose of sheathing conductor rods (2), the shrink tube (64) being stretched prior to sheathing and having a rectangular inner cross section and a rectangular outer cross section even before it is stretched.

17. Shrink tube according to Claim 16, the shrink tube (64) being laid around a support sleeve (62).

18. Method according to Claim 3, **characterized in that** the support sleeve (62) is removed by the support sleeve (62) being separated in the form of a spiral.

19. Method according to Claim 4, **characterized in that** the meltable polymer is conductive.

## Revendications

1. Procédé servant à la fabrication d'un enroulement statorique isolé (60) pour des machines électriques tournantes, en particulier des machines à courant continu et des machines à courant alternatif, lequel enroulement est constitué d'au moins un barreau électriquement conducteur (2) avec une section transversale rectangulaire, **caractérisé en ce qu'**au moins une gaine rétractable isolante électriquement (64) présente, avant la rétraction, une section transversale rectangulaire, est appliquée sur la périphérie du barreau conducteur et est rétractée sur le barreau conducteur.

2. Procédé selon la revendication 1, **caractérisé en ce que** la gaine rétractable (64) est étirée mécaniquement à froid et est appliquée sur la périphérie extérieure d'un manchon support (62) avant que le manchon support enveloppé par la gaine rétractable ne soit tirée sur le barreau conducteur (2) .

3. Procédé selon la revendication 2, **caractérisé en ce qu'**après la pose sur le barreau conducteur du manchon support enveloppé par la gaine rétractable, le manchon support (62) entre la gaine rétractable (64) et le barreau conducteur (2) est enlevé.

4. Procédé selon la revendication 2, **caractérisé en ce que** le manchon support (62) est un polymère fusible, le manchon support étant amené à fusion par apport de chaleur après la pose, sur le barreau conducteur, du manchon support enveloppé par la gaine rétractable.

5. Procédé selon la revendication 1, **caractérisé en ce qu'**une gaine rétractable (64) en matériau thermorétractable est utilisée et qu'elle est rétractée sur le barreau conducteur (2) sous l'effet de la chaleur.

6. Procédé selon la revendication 1, **caractérisé en ce que** la gaine rétractable (64) est tirée à l'état froid sur le barreau conducteur (2), la gaine étant élargie à l'aide d'air comprimé.

7. Procédé selon l'une quelconque des revendications précédentes, **caractérisé en ce que** la gaine rétractable (64) est constituée de plusieurs couches se juxtaposant radialement et présentant des propriétés différentes.

8. Procédé selon la revendication 7, **caractérisé en ce que** la gaine rétractable (64) est fabriquée par coextrusion, par soufflage ou par injection.

9. Procédé selon l'une quelconque des revendications précédentes, **caractérisé en ce qu'**un grand nombre de gaines rétractables (64) avec des propriétés différentes sont appliquées sur la périphérie du barreau conducteur (2).

10. Procédé selon l'une quelconque des revendications précédentes, **caractérisé en ce que** la gaine rétractable (64) présente, sur ses surfaces de contact avec le barreau conducteur (2), une colle thermiquement stable.

11. Procédé selon l'une quelconque des revendications précédentes, **caractérisé en ce que** la gaine rétractable (64) est constituée d'une gaine en élastomère extrudée.

12. Procédé selon l'une quelconque des revendications précédentes, **caractérisé en ce que** le barreau conducteur (2) enveloppé par la gaine rétractable (64) est cintré dans la forme adéquate pour le stator à l'aide d'un dispositif de cintrage (18, 20).

13. Procédé suivant l'une quelconque des revendications précédentes où sont employés des barreaux conducteurs (2) se composant de conducteurs individuels et où les conducteurs individuels présentent de préférence une section transversale rectangulaire.

14. Procédé selon la revendication 13 où les conducteurs individuels sont assemblés les uns aux autres de manière provisoire.

15. Procédé selon l'une quelconque des revendications 13 ou 14, où les barreaux conducteurs (2) ne sont pas torsadés au niveau des développantes.

16. Gaine rétractable pour enrober les barreaux conducteurs (2) où la gaine rétractable (64) est étirée avant l'enrobage et présente, déjà avant l'étirement, une section transversale intérieure rectangulaire ainsi qu'une section transversale extérieure rectangulaire.

17. Gaine rétractable selon la revendication 16 où la gaine rétractable (64) est posée sur un manchon support (62).

18. Procédé selon la revendication 3, **caractérisé en ce que** le manchon support (62) est enlevé grâce à un découpage en forme de spirale du manchon support (62).

19. Procédé selon la revendication 4, **caractérisé en ce que** le polymère fusible est conducteur.
